Europäisches Patentamt

European Patent Office

Office européen des brevets

(19)

(11) Publication number:

**0 173 538**
**A2**

## (12) EUROPEAN PATENT APPLICATION

(21) Application number: **85305919.4**

(22) Date of filing: **20.08.85**

(51) Int. Cl.⁴: **G 11 B 5/52**

(30) Priority: **27.08.84 JP 178042/84**

(43) Date of publication of application: **05.03.86**
**Bulletin 86/10**

(84) Designated Contracting States: **DE FR GB**

(71) Applicant: **Pioneer Electronic Corporation,**
**4-1 Meguro 1-chome, Meguro-ku Tokyo 153 (JP)**

(72) Inventor: **Uchiumi, Satoshi Pioneer Electronic**
**Corporation, Tokorozawa Works,**
**No. 2610 Hanazono 4-chome, Tokorozawa-shi Saitama**
**(JP)**

(74) Representative: **Brunner, Michael John et al, GILL**
**JENNINGS & EVERY 53-64 Chancery Lane, London**
**WC2A 1HN (GB)**

(54) Helical scanning type magnetic recording/reproducing method.

(57) A method for recording and reproducing information signals with a magnetic tape which is helically scanned with a rotary recording and reproducing head in which, upon reproducing, it can readily be determined whether the content of the tape is recorded in the ATR mode or the VTR mode. A series of information signals and an identification signal are recorded in a plurality of respective areas formed by dividing the tape in a crosswise direction thereof. For reproduction, the series of signals recorded at each of these areas is reproduced only when the identification signal is detected.

PIONEER ELECTRONIC CORPORATION.        Re: 90/2504/02

## HELICAL SCANNING TYPE MAGNETIC
## RECORDING/REPRODUCING METHOD

### BACKGROUND OF THE INVENTION

The present invention relates to a helical scanning type magnetic recording/reproducing method.

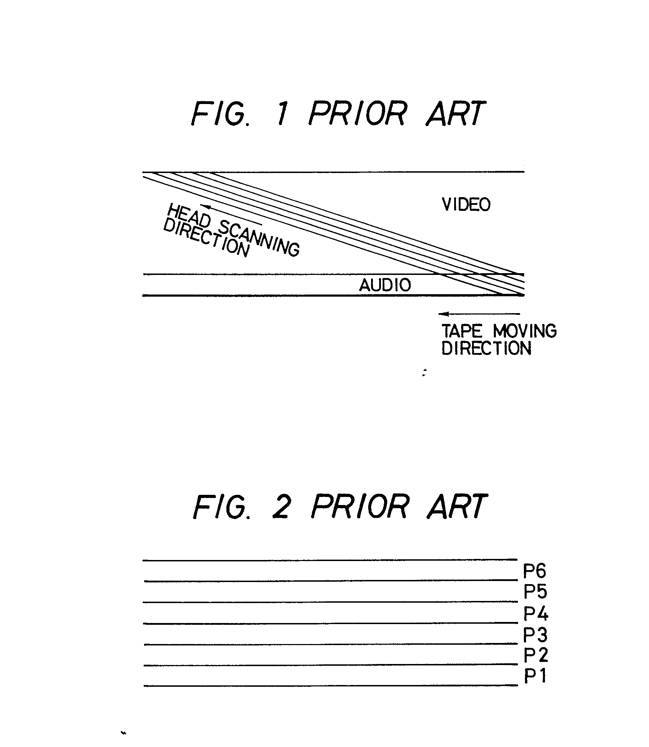

A magnetic recording/reproducing system having a rotary head is arranged to successively record and reproduce signals on and from areas extending in the diagonal direction of a tape using a helical scanning movement of the rotary head. Such a system is commonly employed for a VTR (Video Tape Recorder) or the like. In an 8 mm VTR recently introduced, the magnetic tape format, as shown in Fig. 1, has a PCM (Pulse code Modulation) audio signal area and a video signal area. According to this tape format, a track including a PCM audio signal area and a video signal area is formed in the scanning direction.

The present applicant has proposed a recording/reproducing system (see Japanese Patent Application No. 59-148190), as shown in Fig. 2, in which the VTR can be used for a data recorder or the like. In this case, the tape is divided into a plurality of areas P1 to P6 in the crosswise direction thereof, and a series of information signals is recorded and reproduced in each area. As used herein, the recording/reproducing mode used generally for video tape recording is referred to as the VTR mode, while the recording/reproducing mode for data or audio is hereinafter referred to as the ATR (Audio Tape Recorder) mode.

It is easy to change over between VTR and ATR modes in a VTR. However, when reproducing from a magnetic tape (cassette), it is required to change over from VTR mode reproduction to ATR mode reproduction in accordance with the recorded contents, and to perform automatic change over results in an inconvenience.

## SUMMARY OF THE INVENTION

To overcome this problem, the invention provides a helical scanning type magnetic recording/reproducing method wherein it is possible to accurately determine in a short time whether the content is recorded in the ATR mode or not and to carry out reproduction in accordance with the results of this determination.

A helical scanning type magnetic recording/reproducing method according to the present invention is characterized in that a series of information signals and an identification signal are recorded in a plurality of respective areas formed by dividing the magnetic tape in its crosswise direction. The series of information signals recorded in each of the plurality of areas is reproduced only when the identification signal is detected during reproduction.

## BRIEF DESCRIPTION OF THE DRAWINGS

Fig. 1 illustrates a conventional tape format for an 8 mm VTR;

Fig. 2 shows a tape format when the video area of the tape format of Fig. 1 is further divided into a plurality of areas;

Fig. 3 is a block diagram showing an embodiment of a recording/reproducing apparatus including a recording/reproducing system according to the present invention; and

Figs. 4A through 5D are waveform diagrams used for describing the operations of the circuit of Fig. 3.

## DESCRIPTION OF THE PREFERRED EMBODIMENTS

A preferred embodiment of the invention will be described with reference to the drawings.

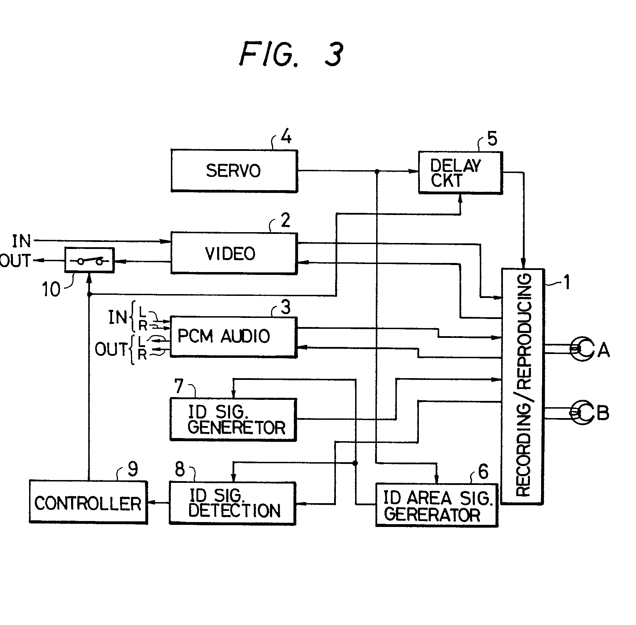

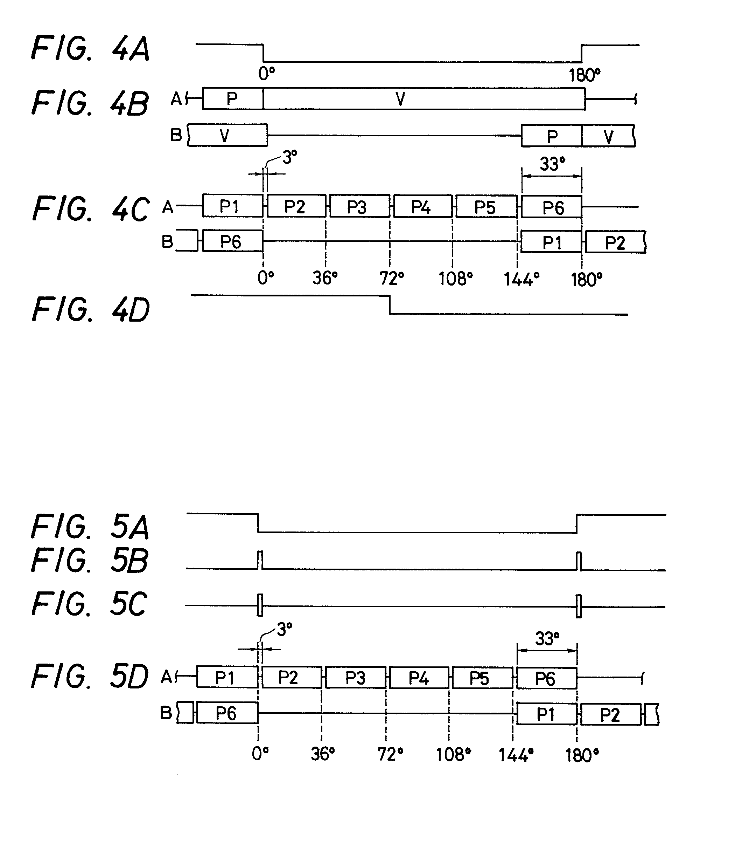

Fig. 3 is a block diagram showing a recording/reproducing system constructed according to the present invention. In this figure, a recording signal and a reproduced signal are passed between a recording/reproducing amplifier 1 and a video circuit 2 or PCM audio circuit 3. The recording/reproducing amplifier 1 supplies recording current to two magnetic head A and B, and also performs amplification and switching of the reproducing output. A servo circuit 4 generates a switching pulse signal, as shown in Fig. 4A, indicating the rotary head phase, which signal is applied through a variable delay circuit 5 to the recording/reproducing amplifier 1 and PCM audio circuit 3.

The format of one track in the VTR mode includes a video area occupying 180° and a PCM audio area of 33°. The recording/reproducing waveform (envelope) is shown in Fig. 4B. In Fig. 4B, characters A and B represent two waveforms corresponding to the two heads A and B. The PCM-recorded data for 8 mm VTR is time compressed by a factor of approximately 6 for one field. The area of about 33° is required for purposes of synchronism and interchangeability. It is seen that the PCM data area is established by the PCM audio circuit 3 so that the edge of the switching pulse (Fig. 4A) is coincident with the end of the PCM data area.

On the other hand, in the ATR mode, the video area is further divided into a plurality of areas, and the divided areas are established as PCM audio areas. In the case that one PCM audio area corresponds to 33°, five areas are arranged at intervals of 36° to make up a 180° video section. Upon adding the original PCM audio area, six-track stereo recording/reproducing is enabled.

Fig. 4C shows a recording/reproducing waveform (envelope) employed in the ATR mode. Reference characters A and B represent two waveforms for the two heads A and B, respectively.

For the tape area arrangement described above, the phase of the switching pulse signal (Fig. 4A) is delayed by means of the delay circuit 5 by a time corresponding to the area shift amount, and the delayed output signal is used as a reference signal for the PCM audio circuit 3 or a head-switching signal for the recording/reproducing amplifier 1. As shown in Fig. 4C, a plurality of PCM audio areas are established, and recording and selective reproducing are effected accordingly.

Fig. 4D shows a waveform of the output of the delay circuit 5. The amount of delay is set to an integral multiple of a value corresponding to 36° (in the NTSC system, 16.68 msec x 36°/180° = 3.337 msec). Five of these delay times (= 180°) are equivalent to the inverted waveform of the switching pulse (Fig. 4A). In this embodiment, equal divisions of 36° are employed; however, this is not necessarily required.

In the VTR mode, since the output as shown in Fig. 4B is obtained, only a continuous video signal appears on the video output line and only PCM data is obtained from the audio output line as a result of switching by the recording/reproducing amplifier 1 in accordance with the switching pulse signal (Fig. 4A).

On the other hand, when a magnetic tape recorded in the ATR mode is reproduced, as shown in Fig. 4C, the recorded signals of the PCM tracks P1 to P6 are reproduced, and therefore the delay operation is effected so that the end of a selected track is coincident with the edge of the delayed output of the delay circuit 5. This output, as shown in Fig. 4D, indicates the phase when, for example, the third track P3 is recorded and reproduced.

When a magnetic tape is to be reproduced, in order to automatically select either VTR mode reproduction or ATR mode reproduction in accordance with the recorded content, an identification signal is recorded at a specified area in the ATR mode. Then, reproduction according to the ATR mode is performed to detect the identification signal.

Namely, _____ there is provided an identification area signal generating circuit 6 for generating an identification area pulse signal indicating the recorded area of the identification signal in accordance with the switching pulse (Fig. 4A), an identification signal generating circuit 7 for generating an identification signal during the presence of the identification area signal in response to the identification area signal and for supplying the identification signal to the recording/reproducing amplifier 1, and an identification signal detecting circuit 8 for detecting the identification signal of the reproduced RF signal during reproduction. The system is arranged such that the reproducing mode is set to the ATR mode in accordance with the results of the detection operation. More specifically, a controller 9 effects control in response to the detection output of the detecting circuit 8 in such a manner that, for example, a muting switch 10 provided at the output line of the video circuit 2 is opened for muting the video output and the delay time of the delay circuit 5 is set in accordance with the designation of the reproducing tracks (P1 to P6).

When PCM recording is carried out in the ATR mode, an identification signal is recorded at a specific area, independent of any one of the PCM audio areas P1 to P6. In this embodiment, as shown in Fig. 4C, since the PCM audio areas Pl to P6 are equally positioned (at intervals of 36°), there are blank portions of about 3° (36° to 33°), and at least one of them, such as the portion immediately after the edge of the switching pulse (Fig. 4A), is established as a recording area of the identification signal. It is, however, impossible to use a blank portion for the detection of ATR mode. Namely, in the case that signals are recorded in the ATR mode at any one of Pl to P6 of a tape previously recorded in the VTR mode, there is no blank portion, only n recorded portions as a result of repeated recording. Furthermore, as in the case where only Pl is recorded in the ATR mode on a tape already recorded in the VTR mode, the conventional PCM data is only updated. This results in a difficulty of distinguishing the recorded signals. However, since the content of the picture differs from that of sound, the difficulty is eliminated by using a specific identification signal.

As described above, by establishing only the blank portion immediately after the edge of the switching pulse as the recording area for identification, when re-recording in the VTR mode, even if the identification signal is not completely eliminated, a reproduced picture of good quality can be obtained because the recorded position is out of the displayed picture area on the TV monitor. An identification area signal indicating the recording area, as shown in Figs. 5A to 5D, is generated by the identification area signal generating circuit 6 in response to the edge of the switching pulse (Fig. 5A). In response to the identification area signal (Fig. 5B), the identification signal generator 7 generates an identification signal (Fig. 5C). The identification signal is repeatedly recorded in the same area whenever PCM data is recorded in the PCM audio areas Pl to P6.

For the identification signal, it is possible to select a signal of a frequency which can accurately be distinguished from carriers such as the other video signals, PCM signals, tracking pilot signals, FM audio signals, and the like. However, for purposes of interchangeability, standardization is preferable. It is desirable to use a recording signal of about 228 KHz in the 8 mm VTR standard format, namely, the so-called f5 signal, as the identification signal. f5 is a recording signal normally used for regulating the head height for movable head recording, and as a result of using f5 as an identification signal, it is possible to use the existing circuit as the identification signal generator 7 and identification signal detecting circuit 8. This results in a simple circuit arrangement arrangement and a low cost. The recording level of the identification signal is determined according to f5, and for high-frequency bias, it is possible to use the PCM or video, carrier, color subcarriers, or the like.

The identification signal (Fig. 5C) that is, a mixture of f5 and the high-frequency bias, is switched by the identification area signal (Fig. 5b) and recorded by the recording/reproducing amplifier 1 on a magnetic tape together with a PCM signal. As a result, as shown in Fig. 5D, this signal is recorded in the blank portion between PCM audio areas P1 and P2.

On the other hand, for reproducing, when the recorded content of tape, as shown in Fig. 5D, is recorded in the ATR mode (including the identification signal), the identification signal (Fig. 5C) included in the reproduced RF signal outputted from the recording/reproducing amplifier 1 is detected by the identification signal detecting circuit 8 during the generation of the identification area signal (Fig. 5B). The identification signal detecting circuit 8, for example, may be implemented with a bandpass filter and a level detecting circuit. The detection can be made using only a burst pilot. One field is sufficient for the detecting time.

Furthermore, during reproduction, if the detection output of the identification signal detecting circuit 8 is continuously monitored, mode changes can be readily processed. In addition, even if only the PCM audio area Pl is recorded in the ATR mode, it can clearly be distinguished from the VTR mode due to the detection of the identification signal. In such a manner, reproduction in the ATR mode is employed during the detection of the identification signal. The muting switch 10 is provided for muting the video output. Further, the delay time of the delay circuit 5 is set in accordance with the designation reproduction areas (Pl to P6). The control for this operation is easily achieved by a microprocessor or the like.

As described above, in the case that PCM information is recorded in the ATR mode on at least one track of the tape with the identification signal, it is possible to detect during reproduction that this information is recorded in the ATR mode, even if the tape is blank prior to the recording or is recorded with video information. On the other hand, in the case that a tape recorded in the ATR mode is recorded in the VTR mode, all recorded contents including the identification signal are eliminated, and therefore the reproduction mode may be changed to the VTR mode.

In the above-described embodiment, the identification signals are recorded at blank portions among a plurality of PCM audio areas. However, it is possible to record the identification signal in a recording area established at the head portion or end portion of every PCM audio area. Furthermore, if a relatively wide recording area is provided for the identification signal which is divided into sections corresponding to the number of PCM audio areas and identification signals are recorded in the various sections, it is also possible to use the identification signal as a signal indicating the area in which PCM information is recorded.

Furthermore, in the above-described embodiment, a blank portion is used for recording the identification signal. However, it is acceptable to superpose the identification signal on an information signal and to detect the identification signal using frequency or time demodulation.

As described above, according to the present invention, a series of information signals and an identification signal are recorded at a plurality of respective areas formed by dividing a magnetic tape in the crosswise direction, and the series of information signals recorded at each of the plural areas is reproduced only when the identification signal is detected during reproduction. Thus, the invention provides a helical scanning type magnetic recording/reproducing system wherein it is possible to accurately determine in a short time whether the recorded content of a tape is recorded in the ATR mode or not, and hence it is possible to reproduce the tape in accordance with the results of this determination.

- 14 -

0173538

## CLAIMS

1. A method of recording on, and reproduction from, a magnetic tape in which a rotary head helically scans across the magnetic tape, and in which during recording and reproduction of a video information signal the rotary head switches between an audio tape recording or reproduction mode and a video tape recording or reproduction mode during each scan, characterised in that when recording only audio or data information signals on the magnetic tape an identification signal is recorded at a particular location on each scan, and in that during reproduction of such a magnetic tape containing an identification signal at the particular location of a scan, detection of that identification signal causes the rotary head to operate in the audio tape reproduction mode through out that scan.

2. A helical scanning type magnetic recording/reproducing method for a recording and reproducing information signals with a magnetic tape helically scanned by a rotary head, comprising the steps of: recording a series of information signals and an identification signal at a plurality of respective areas formed by dividing the magnetic tape in a crosswise direction thereof, and reproducing the series of information signals recorded at each of the plurality of areas only when the identification signal is detected on reproducing.

3. A method as claimed in claim 1 or claim 2, wherein the identification signal is recorded at at least one blank portion among the plurality of areas.

4. A method as claimed in any of the preceding claims, wherein the identification signal is recorded and reproduced in an ATR mode.

5.  A method as claimed in any one of the preceding claims, wherein the blank portion is located immediately after an edge of a switching pulse.

6.  A method of recording on a magnetic tape in which a rotary head helically scans across the magnetic tape, and in which during recording of a video information signal the rotary head switches between an audio tape recording mode and a video tape recording mode during each scan, characterised in that when recording only audio or data information signals on the magnetic tape an identification signal is recorded at a particular location on each scan.

7.  A method of reproduction from a magnetic tape in which a rotary head helically scans across the magnetic tape, and in which during reproduction of a video information signal the rotary head switches between an audio tape reproduction mode and a video tape reproduction mode during each scan, characterised in that during reproduction of such a magnetic tape containing an identification signal at a particular location of a scan, detection of that identification signal causes the rotary head to operate in the audio tape reproduction mode through out that scan.

8.  A system for carrying out a method according to any of the preceding claims.

0173538

# FIG. 1 PRIOR ART

VIDEO

HEAD SCANNING
DIRECTION

AUDIO

TAPE MOVING
DIRECTION

# FIG. 2 PRIOR ART

P6
P5
P4
P3
P2
P1

FIG. 3

FIG. 4A

FIG. 4B

FIG. 4C

FIG. 4D

FIG. 5A
FIG. 5B
FIG. 5C

FIG. 5D